# EUROPEAN PATENT SPECIFICATION

(11) **EP 2 623 184 B1**
(45) Date of publication and mention of the grant of the patent: **14.09.2016**
(21) Application number: 12400004.3
(22) Date of filing: 03.02.2012
(51) Int. Cl.: B01D 59/20

(54) **Adding enrichment modules**
Hinzufügen von Anreicherungsmodulen
Ajout des modules d'enrichissement

(43) Date of publication of application: 07.08.2013
(73) Proprietor: Urenco Limited, Bells Hill Stoke Poges Buckinghamshire SL2 4JS (GB)
(72) Inventor: Bradtke, Christian, Bells Hill Stoke Poges SL2 4JS Bucks. (GB); Strukamp, Heinrich, Bells Hill Stoke Poges SL2 4JS Bucks. (GB)
(74) Representative: Chettle, John Edward

(56) References cited:
- GB-A- 2 144 059

## Description

### Field

The invention relates to connecting a first enrichment module to a second enrichment module. Particularly, but not exclusively, the invention relates to connecting an existing isotope enrichment module comprising one or more cascades of gas centrifuges to a new isotope enrichment module comprising one or more cascades of gas centrifuges.

### Background

A by-product of an isotope separation process is a depleted material in which the percentage of one or more isotopes has been reduced. For example, a by-product of uranium enrichment is a depleted uranium material in which the percentage of uranium 235 isotope has been reduced during the enrichment process. The depleted material, also known as tails, is fed to storage cylinders and transported away from the enrichment facility for long-term storage. The concentration of uranium 235 isotope in the depleted material is referred to below as the tails concentration.

At any particular time, there is a commercially optimum concentration of uranium 235 isotope for the tails. This optimum concentration varies over time, for example depending on changes in the current market price of natural uranium feed material and/or changes in the current market price of separative work. Therefore, when a new enrichment plant is built, the plant is configured to operate at or near to the optimum tails concentration.

However, if the optimum tails concentration changes after the plant has been initially configured, for example because of changes in market conditions causing the optimum tails concentration to fall, the existing plant may not be configured correctly to produce the new optimum concentration. In this case it would be beneficial if the valuable remaining uranium 235 isotope present in the depleted uranium material being output by the enrichment plant could be further extracted in an efficient manner.

GB2144059 discloses a process for concentrating U²³⁵ in a mixture of uranium isotopes with a multiple stage centrifuge cascade comprising a number of centrifuge stages connected in series as a cascade, the product (light fraction) header from each stage is connected to the feed (starting mixture) header of the next stage in the direction of enrichment, and the tails (heavy fraction) header from each stage is connected to the feed header of the preceding stage. The feed headers of all stages are interconnected to equalize the pressure in all feed headers. The cascade feed line, the product line from each stage, and the tails line from each stage have choke valves located therein. By suitably manipulating the choke valves, the tails U²³⁵ concentration can be infinitely varied without impairing the operation of the individual centrifuges in the cascade and without noticeably reducing cascade efficiency, thereby maintaining a constant product U²³⁵ concentration, despite changes in the feed flow and feed concentration.

### Summary

According to the invention, there is provided a connection apparatus configured to: receive a first material from a first isotope enrichment module and feed the received first material into a second isotope enrichment module and a first storage region of a material storage apparatus; and receive a second material from the.second isotope enrichment module and feed the received second material into a second storage region of the material storage apparatus.

The first material may be a first isotope depleted material and the second material may be a second isotope depleted material.

The material storage apparatus may be an isotope depleted material storage apparatus.

The first isotope depleted material, which is received from the first isotope enrichment module, may have been isotope depleted by the first isotope enrichment module.

The second isotope depleted material, which is received from the second isotope enrichment module, may have been isotope depleted by the second enrichment module.

The isotope depleted materials may comprise depleted uranium material.

The uranium material may comprise uranium hexafluoride.

The apparatus may comprise the material storage apparatus.

The material storage apparatus may comprise one or more units for re-configurably increasing the size of the first storage region by transferring storage capacity from the second storage region.

The material storage apparatus may comprise one or more units for re-configurably increasing the size of the second storage region by transferring storage capacity from the first storage region.

The one or more units may be configured to re-configurably assign each of a plurality of storage containers of the storage apparatus to the first or second storage regions.

The storage apparatus may comprise a feed channel to which the storage containers are connected to receive the first and second materials from the first and second isotope enrichment modules.

Each of the units for re-configurably assigning the containers to the first or second storage regions may comprise a flow isolation unit located in the feed channel between the connections to the storage containers.

Each of the one or more units may comprise a closable valve which when closed is configured to reduce the number of storage containers connected to receive either:
the first material from the first enrichment module; or
the second material from the second enrichment module.

When open each closable valve may be configured to increase the number of storage containers connected to receive either.
the first material output by the first enrichment module; or
the second material output by the second enrichment module.

The apparatus may comprise a flow control unit configured to control the proportion of first material received from the first isotope enrichment module which is fed to the first storage region of the storage apparatus and thereby control the proportion of first material received from the first isotope enrichment module which is fed to the second isotope enrichment module.

The apparatus may comprise a sensor configured to detect at least one flow property of first material received at the second enrichment module and to provide a control signal to the flow control unit indicative of the detected flow property.

This allows the flow control unit to adjust the proportion of first material received from the first enrichment module which is fed into the first region of the storage apparatus in dependence of the detected flow property at the second enrichment module. An adjustment in the proportion of received first material fed to the first region of the storage apparatus may cause a corresponding, opposite, adjustment in the proportion of received first material fed to the second isotope enrichment module.

The flow control unit may comprise a variable valve for controlling the proportions of received first material fed to the first region of the storage apparatus and second isotope enrichment module and a bypass valve in parallel with the variable valve to provide a bypass route for the received first material into the first region of the storage apparatus.

When open, the bypass valve allows first material received from the first enrichment module to flow into the first region of the storage apparatus regardless of the state of the variable valve.

The flow control unit may be configured to control the feed rate of first material into the first region of the storage apparatus depending on the signal received from the sensor.

The flow control unit may be configured to increase the feed rate of first material into the first region of the storage apparatus in response to a high pressure signal from the sensor.

The flow control unit may be configured to reduce the feed rate of first material guided into the first region of the storage apparatus in response to a low pressure signal from the sensor.

The apparatus may be configured to receive material which has been isotope enriched by the second isotope enrichment module and to feed the received enriched material into the first isotope enrichment module.

The material which has been isotope enriched by the second isotope enrichment module may comprise uranium material.

The uranium material may comprise uranium hexafluoride.

According to the invention, there is provided an apparatus configured to receive material from a first isotope enrichment module and feed the received material into a second isotope enrichment module and a storage apparatus, comprising a flow control unit configured to control the proportion of material received from the first isotope enrichment module which is fed to the material storage apparatus.

The material may be isotope depleted material which has been isotope depleted by the first enrichment module.

The apparatus may be configured to feed the received material not fed to the storage apparatus to the second isotope enrichment module and thereby control the proportion of material received from the first isotope enrichment module which is fed to the second isotope enrichment module.

The apparatus may comprise a sensor configured to detect at least one flow property of material fed to the second enrichment module and to provide a control signal to the flow control unit indicative of the detected flow property to control the proportions of received material fed to the storage apparatus and second isotope enrichment module.

The flow control unit may be configured to control the feed rate of material into the storage apparatus in dependence of the signal received from the sensor.

The flow control unit may be configured to increase the feed rate of material into the storage apparatus in response to a high pressure signal from the sensor.

The flow control unit may be configured to reduce the feed rate of material into the storage apparatus in response to a low pressure signal from the sensor.

The apparatus may use uranium hexafluoride as a process material.

The enrichment modules may comprise gaseous centrifuges configured to enrich gaseous feed material.

The apparatus may be configured to:
feed material directly from a feed source into the primary enrichment module; and
feed material directly from the feed source into the secondary enrichment module to enable the feed source to supply either or both of the primary and secondary enrichment modules with feed material.

According to the invention, there is provided a method comprising: receiving a first material from a first isotope enrichment module and feeding the received first material into a second isotope enrichment module and a first storage region of a material storage apparatus; and receiving a second material from the second isotope enrichment module and feeding the received second material into a second storage region of the storage apparatus.

The first material may be a first isotope depleted material and the second material may be a second isotope depleted material.

The material storage apparatus may be a depleted material storage apparatus.

The first isotope depleted material, which is received from the first isotope enrichment module, may have been isotope depleted by the first isotope enrichment module.

The second isotope depleted material, which is received from the second isotope enrichment module, may have been isotope depleted by the second enrichment module.

According to the invention, there is provided a method comprising: receiving material from a first isotope enrichment module and feeding the received material into a second isotope enrichment module and a material storage apparatus; and controlling the proportion of material received from the first isotope enrichment module which is fed to the material storage apparatus.

Receiving the material may comprise receiving material which has been isotope depleted by the first isotope enrichment module.

For the purposes of example only, embodiments of the invention are described below with reference to accompanying figures in which:

### Brief description of the figures

Figure 1 is a schematic diagram of a gas centrifuge configured to output an enriched uranium material and a depleted uranium material;
figure 2 is a schematic diagram of a cascade, in which centrifuges are connected in parallel to form a stage and these stages are connected in series. Heavier and lighter isotopes tend to travel in opposite directions to be output through respective outputs of the cascade;
figure 3 is a schematic diagram showing the connections between two enrichment modules, each of which may contain one or more cascades of gas centrifuges. Depleted uranium material output by a first of the modules is input to a second of the modules and an enriched uranium material output by the second of the modules is input to the first module;
figure 4 is a schematic diagram of a cascade of gas centrifuges;
figure 5 is a schematic diagram of two enrichment modules comprising cascades of gas centrifuges connected to a reconfigurable uranium storage unit; and
figure 6 is a flow diagram of a method of operating connected enrichment modules.

### Detailed description

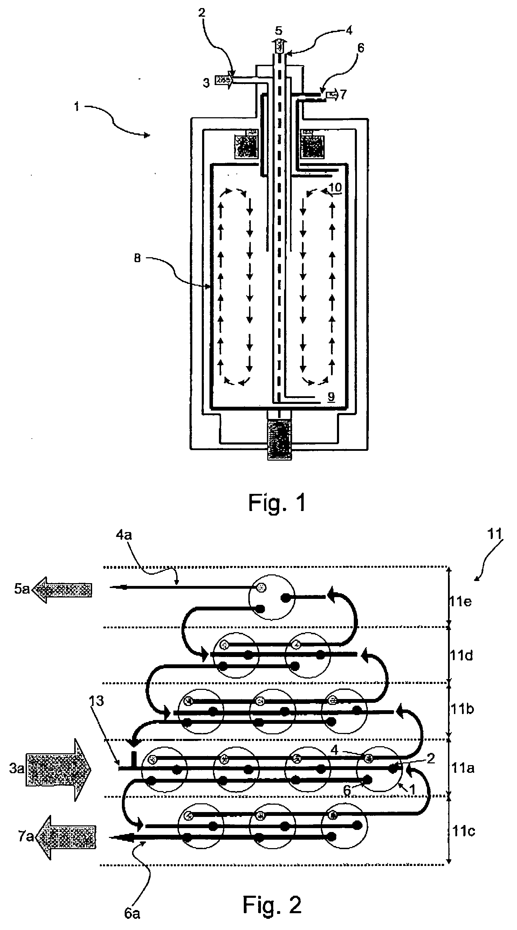

Referring to figure 1, a gas centrifuge 1 comprises an inlet 2 for receiving mixed isotope feed material 3, a first outlet 4 for outputting isotope enriched material 5 and a second outlet 6 for outputting isotope depleted material 7. For illustrative purposes, the feed material 3, the isotope enriched material 5, which is enriched in a particular isotope relative to the feed material 3, and the isotope depleted material 7, which is depleted in the particular isotope relative to the feed material 3, are referred to below as uranium feed material 3, enriched uranium material 5 and depleted uranium material 7. The particular isotope is referred to as uranium 235 isotope, but the particular isotope may instead be other chemical isotopes.

The uranium feed material 3 comprises both uranium 235 isotope and uranium 238 isotope and the centrifuge 1 is configured to separate these isotopes to create the enriched and depleted materials 5, 7. For example, as shown in figure 1, during use a first region 9 of a rotor 8 of the centrifuge 1 may contain enriched uranium material 5 in which the percentage of uranium 235 is increased compared to the feed material 3 and a second region 10 of the rotor 8 may contain depleted uranium material 7 in which the percentage of uranium 235 is reduced compared to the feed material 3. The first (enriched material) outlet 4 is arranged to collect enriched uranium material 5 from the enriched first region 9 of the rotor 8, whilst the second (depleted material) outlet 6 is arranged to collect depleted uranium material 7 from the depleted second region 10 of the rotor 8. The enriched and depleted material outlets 4, 6 are configured to output the enriched and depleted uranium materials 5, 7 as described below. The uranium materials 3, 5, 7 may all comprise gaseous uranium hexafluoride (UF₆).

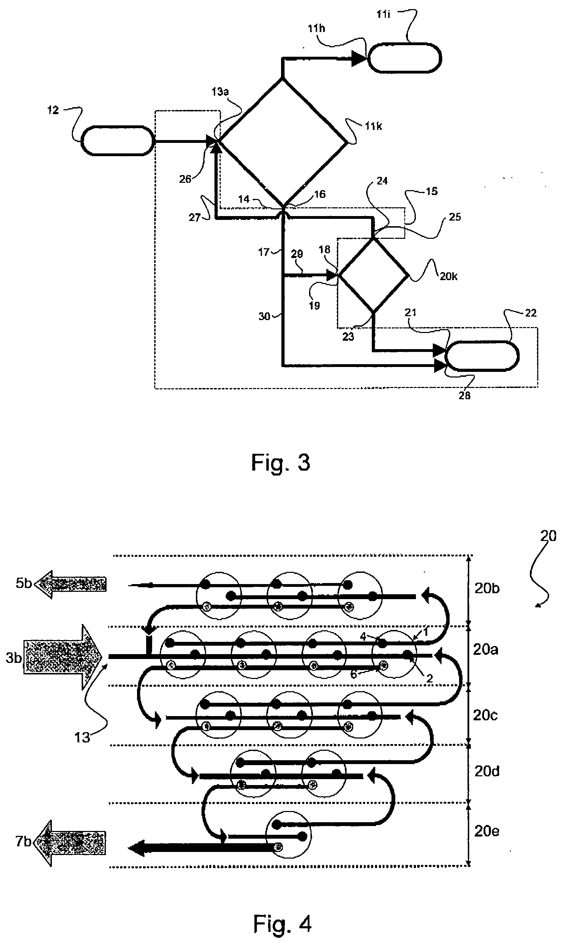

Referring to figure 2, a plurality of the centrifuges 1 are connected in parallel to form a stage and these stages are connected in series forming a primary cascade 11 of centrifuges 1. A feed stage 11a of the primary cascade 11 comprises one or more centrifuges 1 of which the inlets 2 are connected to receive uranium feed material 3a from a uranium feed source 12 via a feed inlet 13 of the cascade 11. The feed source 12 is illustrated in figure 3. The feed source 12 may comprise a uranium hexafluoride storage cylinder or other suitable container. The enriched material outlet(s) 4 of the centrifuge(s) 1 in the feed stage 11a are connected to the inlet(s) 2 of one or more centrifuges 1 in a first enriched stage 11b of the cascade 11 so that enriched uranium material 5 output by the centrifuge(s) 1 in the feed stage 11a is fed into the centrifuge(s) 1 in the first enriched stage 11b. The depleted material outlet(s) 6 of the centrifuge(s) 1 in the feed stage 11a are connected to the inlet(s) 2 of one or more centrifuges 1 in a first depleted stage 11c of the cascade 11 so that depleted uranium material 7 output by the centrifuge(s) 1 in the feed stage 11a is fed into the centrifuge(s) 1 in the first depleted stage 11c. As shown in figure 2, the cascade 11 may comprise a plurality of enriched stages and/or depleted stages 11b-e to further enrich and/or deplete the uranium feed material 3a in uranium 235. For example, the centrifuges 1 in the first enriched stage 11b are configured to output enriched uranium material 5 to centrifuges 1 in a second enriched stage 11d and to output depleted uranium material 7 back to the centrifuges 1 in the feed stage 11a. Meanwhile, the centrifuges 1 in the first depleted stage 11c are configured to output enriched uranium material 5 back to the centrifuges 1 in the feed stage 11a. Although not shown in figure 2, the centrifuges 1 in the first depleted stage 11c may be configured to output depleted uranium material 7 to centrifuges 1 in a second depleted stage.

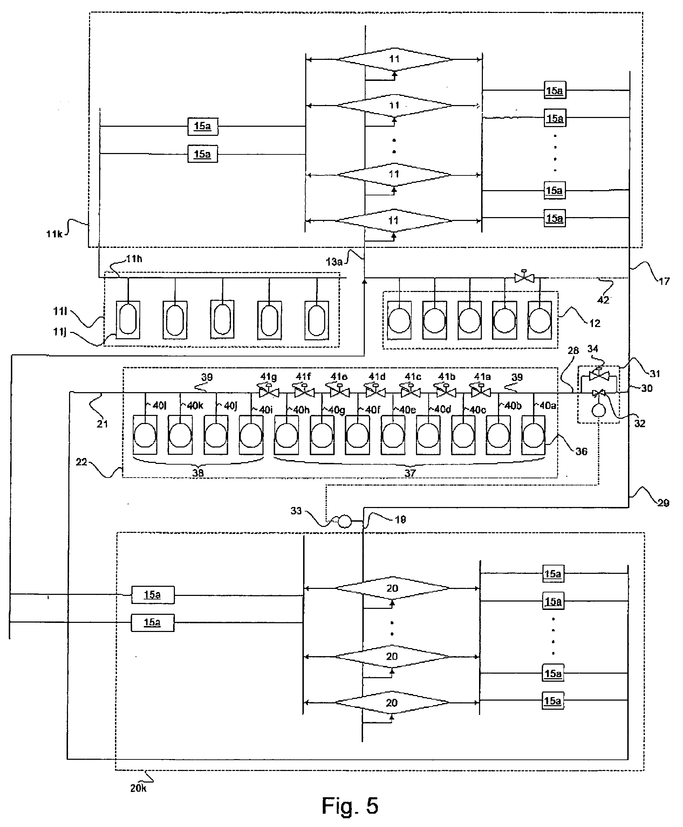

Referring to figures 3 and 5, a primary isotope enrichment module 11k comprises a plurality of the primary cascades 11 described above. All of the primary cascades 11 may be configured to receive uranium feed material 3a from the same uranium feed source 12 via an inlet 13a of the primary enrichment module 11k. The primary enrichment module 11k is configured to transfer the enriched material 5a output by enriched material outlets 4a of the primary cascades 11 to an enriched material storage unit 11i. For example, referring to figure 3, the primary enrichment module 11k may be configured to transfer the enriched materials 5a to an enriched material inlet 11h of the enriched uranium material storage unit 11i. As shown in figure 5, the enriched material storage unit 11i may comprise a plurality of uranium storage containers 11j connected to receive the enriched uranium material 5a output by the primary enrichment module 11k. A conduit may connect the enrichment module 11k to the storage unit 11i so that uranium material can flow from the enrichment module 11k to the storage unit 11i through the conduit.

Referring to figures 2, 3 and 5, the primary enrichment module 11k is configured to transfer the depleted material 7a output by depleted material outlets 6a of the primary cascades 11 to an enrichment module connection apparatus 15. For reasons of clarity, this depleted material 7a is referred to below as first depleted material 7a. As is illustrated in figure 3, the first depleted materials 7a may be fed to the connection apparatus 15 via a depleted material outlet 16 of the primary enrichment module 11k. The depleted material output 16 of the primary enrichment module 11k is connected to a depleted material inlet 14 of the connection apparatus 15 and is configured to feed first depleted uranium material 7a output by the primary enrichment module 11k into the depleted material inlet 14 of the connection apparatus 15. One or more pumps 15a may be provided to pump the uranium material 5a, 7a through the connection apparatus 15.

The depleted material inlet 14 of the connection apparatus 15 is connected, for example via a conduit 17, to a first depleted material outlet 18 of the connection apparatus 15. The first depleted material outlet 18 is, in turn, connected to a feed material inlet 19 of a secondary isotope enrichment module 20k.

The secondary enrichment module 20k comprises one or more secondary cascades 20. An example of such a secondary cascade 20 is illustrated schematically in figure 4. As with the primary cascade 11 previously described, each secondary cascade 20 comprises a plurality of connected centrifuges 1. A feed stage 20a of each of the secondary cascades 20 comprises one or more centrifuges 1 into which uranium feed material 3b, which comprises the first depleted uranium material 7a output by the primary cascades 11 in the primary enrichment module 11k, is fed from the feed material inlet 19 of the secondary enrichment module 20k via a feed inlet 13 of the cascade 20. As with the primary cascade 11 previously described, each of the secondary cascades 20 also comprises one or more stages of centrifuges 1. For example, as illustrated in figure 4, the secondary cascade 20 may comprise an enriched stage 20b of centrifuges 1 and three depleted stages 20c, 20d, 20e of centrifuges 1. The enriched and depleted material outlets 4, 6 of the centrifuges 1 in the various stages 20a-e of the secondary cascade 20 are connected so that enriched 5b and depleted 7b uranium materials flow between the stages 20a-e in the same manner as described previously with respect to the primary cascade 11.

The secondary enrichment module 20k is configured to transfer the depleted material 7b from the final depleted stages 20e of the secondary cascades 20 to a storage apparatus 22. For example, the depleted material 7b may be fed to a secondary enrichment module inlet 21 of the storage apparatus 22 via a depleted material outlet 23 of the enrichment module 20k. For reasons of clarity, the depleted material 7b which is output from the secondary enrichment module 20k is referred to below as second depleted material 7b.

The secondary enrichment module 20k is configured to transfer the enriched material 5b from the final enriched stages 20b of the secondary cascades 20 of the secondary enrichment module 20k to an enriched material inlet 24 of the connection apparatus 15. For example, the enriched material 5b may be fed to the connection apparatus 15 via an enriched material outlet 25 of the secondary enrichment module 20k. The enriched material inlet 24 of the connection apparatus 15 is connected to the feed inlet 13a of the primary enrichment module 11k described above via an enriched material outlet 26 so that enriched material 5b can flow from the secondary enrichment module 20k into the primary enrichment module 11k.

Therefore, the secondary enrichment module 20k is connected to receive the first depleted uranium material 7a output by the primary enrichment module 11k and to output second depleted uranium material 7b to the storage apparatus 22 and uranium material 5b enriched by the secondary enrichment module 20k back to the primary enrichment module 11k.

Referring to figure 5, the connection apparatus 15 may be additionally configured to feed the first depleted uranium material 7a received from the primary enrichment module 11k into the uranium storage apparatus 22 via a primary enrichment module inlet 28 of the storage apparatus 22. In this respect, the connection apparatus 15 may comprise a first channel 29 configured to feed the first depleted uranium material 7a into the feed inlet 19 of the secondary enrichment module 20k and a second channel 30 configured to feed the first depleted uranium material 7a into the primary enrichment module inlet 28 of the uranium storage apparatus 22.

Referring to figure 5, the flow rate of first depleted uranium material 7a into the secondary enrichment module 20k and the storage apparatus 22 may be controlled by a flow control unit 31 of the connection apparatus 15. The flow control unit 31 is configured to selectively increase and decrease the rate of flow of first depleted uranium material 7a into the storage apparatus 22, and thereby also into the secondary enrichment module 20k, as required. This is explained further below.

For a given rate of flow of first depleted uranium material 7a output by the primary enrichment module 11k, an increase in the amount of uranium material 7a entering the storage apparatus 22 causes a corresponding reduction in the amount of uranium material 7a entering the secondary enrichment module 20k. Likewise, a decrease in the amount of uranium material 7a entering the storage apparatus 22 causes a corresponding increase in the amount of uranium material 7a entering the secondary enrichment module 20k.

Referring to figure 5, the control unit 31 may comprise a valve apparatus configured to control the flow of uranium material 7a into the uranium storage apparatus 22. The valve apparatus may be located in the second channel 30 of the connection apparatus 15 referred to above. The valve apparatus comprises a variable valve 32 which is configured to increase and/or decrease the flow rate of uranium material 7a from the primary enrichment module 11k into the storage apparatus 22. For example, the variable valve 32 may be configured to increase or decrease the flow resistance of the second channel 30 of the connection apparatus 15 by actuating a flow resistance element in the channel 30, thereby affecting the uranium material flow rate into the storage apparatus 22. A specific example of the resistance element is one which, when selectively actuated, is configured to increase or decrease the size of an aperture through which the uranium material 7 flows into the storage apparatus 22.

The variable valve 32 may be configured to receive control signals from a sensor 33 in the first channel 29 of the connection apparatus 15 and to adjust the rate of flow of uranium material 7a into the uranium storage apparatus 22 depending on the signal from the sensor 33. The sensor 33 is configured to detect at least one flow property of the uranium material 7a and may, for example, comprise a pressure sensor configured to detect a pressure of depleted uranium material 7a flowing past the sensor 33 into the feed inlet 19 of the secondary enrichment module 20k. The sensor 33 may additionally or alternatively comprise a flow rate sensor configured to detect a rate of flow of the first depleted uranium material 7a flowing past the sensor 33 into the feed inlet 19 of the secondary enrichment module 20k. If the sensor 33 detects that a property such as the pressure and/or flow rate of the uranium material 7a entering the secondary enrichment module 20k is higher than desired, for example above a predetermined threshold value, then the sensor 33 is configured to send this information to the flow control unit 31 in a feedback signal. The feedback signal is sent via a communication coupling between the sensor 33 and the flow control unit 31, as illustrated in figure 5. Any suitable wired or wireless communication link, or any other suitable mechanism, may be used. In response to the feedback signal, the flow control unit 31 is configured to adjust the configuration of the variable valve 32 to reduce the flow resistance of the second channel 30 and thereby increase the rate of flow of first depleted uranium material 7a into the uranium storage apparatus 22. This necessarily reduces the rate of flow of first depleted uranium material 7a into the feed inlet 19 of the secondary enrichment module 20k, thereby bringing the value detected by the sensor 33 below the predetermined threshold.

In an opposite process, if the sensor 33 detects that the pressure and/or flow rate of the uranium material 7a entering the secondary enrichment module 20k is lower than desired, for example below a predetermined threshold value, the sensor 33 is configured to send a feedback signal to the flow control unit 31 to indicate the low value. In response to the feedback signal, the flow control unit 31 is configured to adjust the configuration of the variable valve 32 to increase the flow resistance of the second channel 30 and thereby decrease the rate of flow of first depleted uranium material 7a into the uranium storage apparatus 22. This necessarily increases the rate of flow of first depleted uranium material 7a into the feed inlet 19 of the secondary enrichment module 20k, thereby bringing the value detected by the sensor 33 above the predetermined threshold.

The flow control unit 31 may further comprise a bypass valve 34 for overriding the variable valve 32. The bypass valve 34 is operable independently of the variable valve 32 as an instant bypass route in case of abnormal conditions. The bypass valve 34 is connected in parallel with the variable valve 32 so that, if the bypass valve 34 is open, uranium material 7a flows into the uranium storage apparatus 22 through the bypass valve 34. The bypass valve 34 may be configured to selectively open and close automatically or in response to user input. For example, the connection apparatus 15 may include a control panel (not shown) or other suitable unit for inputting user instructions to open or close the valve 34.

The uranium material storage apparatus 22 comprises a plurality of uranium storage containers 36 configured to store uranium material More specifically, the uranium storage apparatus 22 is divided into first and second uranium material storage regions 37, 38 of containers 36 configured to receive depleted uranium materials 7a, 7b output by the primary and secondary enrichment modules 11k, 20k respectively. The uranium storage containers 36 are divided into two sets 37, 38, with each set 37, 38 comprising one or more of the containers 36. A first set 37 of the containers 36 is connected to receive first depleted uranium material 7a output by the primary enrichment module 11k via the primary enrichment module inlet 28 of the storage apparatus 22, whilst the second set 38 of containers 36 is connected to receive second depleted uranium material 7b output by the secondary enrichment module 20k via the secondary enrichment module inlet 21 of the storage apparatus 22.

The storage apparatus 22 is selectively re-configurable so that storage containers 36 in the first set 37 can be transferred to the second set 38 and vice versa. For example, referring to figure 5, the storage apparatus 22 may comprise a uranium material feed channel 39 from which uranium material 7a, 7b can enter all of the uranium storage containers 36. The uranium material feed channel 39 may comprise a suitable conduit such as a pipe. The uranium material feed channel 39 is connected at a first of its ends to receive first depleted uranium material 7a from the primary enrichment module inlet 28 of the storage apparatus 22 and, at a second of its ends, to receive second depleted uranium material 7b from the secondary enrichment module inlet 21 of the storage apparatus 22. Each of the uranium storage containers 36 is individually connected to receive uranium material 7a, 7b from the feed channel 39. For example, conduits 40a-l spaced along the feed channel 39 may individually connect the feed channel 39 to entrances of the storage containers 36.

The uranium feed channel 39 of the storage apparatus 22 may contain a plurality of flow isolation units 41a-g, each of which is configured to selectively close the channel 39 and thereby prevent the flow of uranium materials past the closed isolation unit 41. The flow isolation units 41 may each comprise a closable valve which can be selectively opened and closed to open and close the channel 39. For example, referring to figure 5, the valve of a first of the units 41g may be closed whilst the valves of the remaining units 41a-f remain open. The closed unit 41g divides the plurality of uranium storage containers 36 into the two sets 37, 38. Specifically, the containers 36 whose feed conduits 40i-l are connected to receive uranium material 7b from a region of the feed channel 39 which is on the secondary enrichment module inlet 21 side of the closed unit 41g are in the second set 38 and receive depleted uranium material 7b output by the secondary enrichment module 20k. The containers 36 whose feed conduits 40a-h are connected to receive uranium material 7a from a region of the feed channel 39 which is on the primary enrichment module inlet 28 side of the closed unit 41g are in the first set 37 and receive depleted uranium material 7a output by the primary enrichment module 11k. By closing different ones of the flow isolation units 41a-g, the number of uranium storage containers 36 in each set 37, 38 can be varied as required.

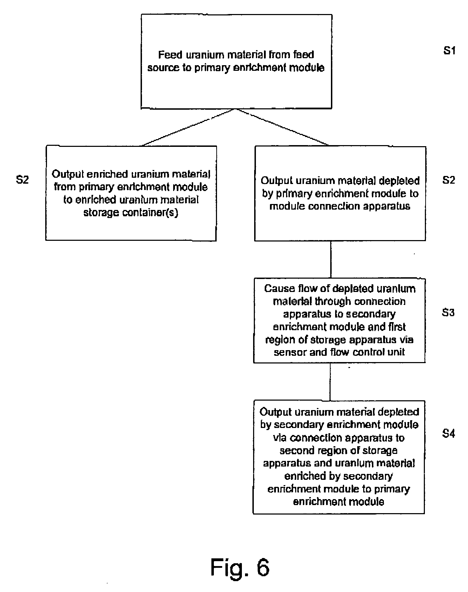

An example of a flow of a batch of uranium material through the connection apparatus 15 is described below with reference to figure 6. It is important to note that these steps are not necessarily chronologically consecutive to each other, but may be simultaneous steps. In a first step S1, uranium feed material 3a is fed from the feed source 12 into the primary uranium enrichment module 11k. The uranium feed material 3a is enriched in a plurality of primary cascades 11, as previously described, so that in a second step S2 an enriched uranium material 5a is output from the primary enrichment module 11k to the enriched uranium material storage unit 11i and a first depleted uranium material 7a is output from the primary enrichment module 11k to the connection apparatus 15. The enriched uranium material 5a output by the primary enrichment module 11k is referred to in the industry as 'product' and can, for example, be used for nuclear fuel in power stations. In a third step S3, the first depleted uranium material 7a flows through the first channel 29 of the connection apparatus 15 to the sensor 33 previously described and through the second channel 30 of the connection apparatus 15 to the flow control unit 31. The sensor 33 senses properties of the first depleted uranium material 7a in the first channel 29, such as pressure and/or flow rate, and provides the sensed information in a feedback signal to the flow control unit 31 in the second channel 30 of the connection apparatus 15. The flow control unit 31 adjusts the flow rate of uranium material 7a into the first set 37 of storage container 36 in the uranium storage apparatus 22, and thereby also controls the flow rate of uranium material 7a into the secondary enrichment module 20k, in dependence of the feedback signal from the sensor 33. The flow isolation units 41 in the feed channel 39 are opened and closed as required before or during the enrichment process to select the preferred number of containers 36 for the first set 37

In a fourth step S4, second depleted uranium material 7b output by the secondary enrichment module 20k is fed by the connection apparatus 15 to the second set 38 of storage containers 36 in the uranium storage apparatus 22 and enriched uranium material 5b output by the secondary enrichment module 20k is fed by the connection apparatus 15 to the inlet(s) 13 of the primary enrichment module 11k. As with the first set 37 of containers 36, the flow isolation units 41 are opened and closed as required before or during the enrichment process to select the preferred number of containers 36 for the second set 38. The uranium material 7b in the second set 38 of containers 36 is more depleted in uranium 235 than the uranium material 7a in the first set 37 of the containers 36 because the uranium material 7b in the second set 38 has been subjected to further depletion in the secondary cascades 20 of centrifuges 1 in the secondary enrichment module 20k.

In this way, first depleted uranium material 7a output from the primary enrichment module 11k is re-enriched in uranium 235 by the secondary enrichment module 20k and fed as feed material back into the primary enrichment module 11k.

The connection apparatus 15 and process described above enables a new or otherwise additional secondary enrichment module 20k to be added to an existing installed primary enrichment module 11k in such a way that the existing feed 12 and take-off capacity 11i is shared by the two enrichment modules 11k, 20k. This means that no, or very little, additional feed 12 and take-off capacity 11i, for example in the form of uranium storage units, needs to be added for the installation and operation of the secondary enrichment module 20k. It might even be possible to reduce the feed and/or take off capacity. The connection apparatus 15 also allows the enrichment modules 11k, 20k to share a re-configurable storage apparatus 22, meaning that existing depleted material (tails) capacity can be utilised by both enrichment modules 11k, 20k.

If the connection apparatus 15 was not used, the cost of installing the secondary enrichment module 20k, for example as part of a new, separate plant, would be much higher because additional feed capacity 12, enriched material (product) take-off capacity 11i and depleted material take-off capacity 22 would need to be added. By use of the connection apparatus 15, no additional feed 12 or product 11i capacity would be needed and any required increase in the tails capacity would be less than if the primary and secondary enrichment modules 11k, 20k operated alone.

As an illustrative example, consider an existing uranium enrichment plant in which the uranium material 3a from the feed source 12 is naturally occurring uranium material comprising approximately 0-7% uranium 235 and 99.3% uranium 238 whilst the enriched uranium material 5a output by the cascades 11 of the enrichment module contains a higher percentage of uranium 235, for example 4%. First depleted uranium material 7a is output by the cascades 11 of the enrichment module at a concentration which would have been set when the plant was built. The concentration of the first depleted uranium material 7a could, for example, be approximately 0.3% uranium 235, with the remaining approximately 99.7% being uranium 238.

If market conditions change such that the optimum concentration for the depleted material 7a becomes lower, for example 0.1% uranium 235, the connection apparatus 15 allows the installation of additional cascades 20 of centrifuges 1 in order to reduce the concentration of the first depleted material 7a to the new lower optimum level. Specifically, the connection apparatus 15 allows the economical addition of a secondary module 20k of cascades 20 and reconfiguration of the existing feed 12 and take-off 11i facilities to allow sharing of the facilities by the existing and new enrichment modules. The previously existing cascades 11 form the primary enrichment module 11k referred to above and the additional cascades 20 form the secondary enrichment module 20k referred to above. When the first depleted uranium material 7a from the primary enrichment module 11k is fed to the secondary enrichment module 20k, the secondary enrichment module 20k can be configured to output an enriched uranium material 5b comprising approximately 0.7% uranium 235 and approximately 99.3% uranium 238 whilst simultaneously outputting second depleted uranium material 7b comprising approximately 0.1% uranium 235 and approximately 99.9% uranium 238.

As can be seen from the illustrative example, the enriched uranium material 5b output by the secondary enrichment module 20k can be produced with the same percentages of uranium 235 and uranium 238 as the original feed material 3a from the feed source 12. Therefore, this enriched material 5b can be mixed with feed material 3a from the feed source 12 without affecting the output of the primary cascade(s) 11 and thus reduce the amount of feed material 3a needed from the feed source 12.

The connection apparatus 15 described above allows the installation of a new enrichment module 20k in an existing facility without the need for installation of new feed and take-off services which would be required in a new plant. The lack of requirement for new equipment such as feed units 12, enriched material storage units 11i and pumps 15a reduces the capital cost of installing the enrichment module 20k compared with installing the enrichment module 20k in a new facility. Furthermore, the cost of operating the enrichment modules 11k, 20k is reduced because of a reduced requirement to connect and disconnect uranium material storage units 11i, 12, 36 to/from the enrichment modules 11k, 20k and to transport the storage units 11i, 12, 36 from one facility, for example containing the primary enrichment module 11k, to another facility, for example containing the secondary enrichment module 20k. The cost of operating the modules 11k, 20k is further reduced by a lower overall energy consumption resulting from the operation of fewer feed units 12, take-off units 11i and pumps 15a.

The use of the re-configurable storage apparatus 22 allows the size of the depleted material 7a, 7b storage facilities for the primary enrichment module 11k and the secondary enrichment module 20k to be increased or reduced as required with relative ease by adjustment of the isolation valves 41. The isolation valves 41 allow the available storage containers 36, and their associated connections to the common feed channel 39, to be transferred directly between the enrichment modules 11k, 20k.

Optionally, as illustrated in figure 5, an additional flow channel 42 can be added between the uranium material feed source 12 and the secondary enrichment module feed channel 29 of the connection apparatus 15. This flow channel 42 allows the secondary enrichment module 20k to be fed directly from the feed uranium material source 12 and thus would allow continued operation of the secondary enrichment module 20k even if a full flow of uranium material 7a from the primary enrichment module 11k were not available for any reason.

It will be appreciated that the alternatives described above can be used singly or in combination. This invention is not limited to uranium materials and can be employed with other isotopes.

## Claims

1. A connection apparatus configured to:
receive a first material from a first isotope enrichment module and feed the received first material into a second isotope enrichment module and a first storage region of a material storage apparatus, and
receive a second material from the second isotope enrichment module and feed the received second material into a second storage region of the material storage apparatus.

2. An apparatus according to claim 1, wherein the first material is a first isotope depleted material, the second material is a second isotope depleted material and the material storage apparatus is an isotope depleted material storage apparatus.

3. An apparatus according to claim 1 or 2, which is configured to connect a new enrichment module to an existing enrichment module by:
receiving the first material from the first isotope enrichment module and feeding the received first material into an added second isotope enrichment module and a first storage region of the material storage apparatus; and
receiving the second material from the added second isotope enrichment module and feeding the received second material into a second storage region of the material storage apparatus.

4. An apparatus according to any of claims 1 to 3 and the second isotope enrichment module connected to receive the first material from the apparatus.

5. An apparatus According to any preceding claim, further comprising the material storage apparatus.

6. An apparatus according to claim 5, wherein the material storage apparatus comprises one or more units for re-configurably increasing the size of the first storage region by transferring storage capacity from the second storage region.

7. An apparatus according to claim 5 or 6, wherein the material storage apparatus comprises one or more units for re-configurably increasing the size of the second storage region by transferring storage capacity from the first storage region.

8. An apparatus according to any preceding claim, comprising a flow control unit configured to control the proportion of first material received from the first isotope enrichment module which is fed to the first storage region of the storage apparatus and thereby control the proportion of first material received from the first isotope enrichment module which is fed to the second isotope enrichment module.

9. An apparatus according to claim 8, comprising a sensor configured to detect at least one flow property of first material received at the second enrichment module and to provide a control signal to the flow control unit indicative of the detected flow property to control the proportions of received first material fed to the first region of the storage apparatus and second isotope enrichment module.

10. An apparatus according to any preceding claim, configured to receive material which has been isotope enriched by the second isotope enrichment module and to feed the received enriched material into the first isotope enrichment module.

11. An apparatus configured to receive material from a first isotope enrichment module and feed the received material into a second isotope enrichment module and a material storage apparatus, comprising a flow control unit configured to control the proportion of material received from the first isotope enrichment module which is fed to the material storage apparatus.

12. An apparatus according to claim 11, wherein the apparatus is configured to feed the received material not fed to the isotope material storage apparatus to the second isotope enrichment module and thereby control the proportion of material received from the first isotope enrichment module which is fed to the second isotope enrichment module.

13. An apparatus according to any preceding claim, which is configured to:
feed material directly from a feed source into the primary enrichment module; and
feed material directly from the feed source into the secondary enrichment module to enable the feed source to supply either or both of the primary and secondary enrichment modules with feed material.

14. A method comprising:
receiving material from a first isotope enrichment module and feeding the received material into a second isotope enrichment module and a first storage region of a material storage apparatus; and
receiving material from the second isotope enrichment module and feeding the received material into a second storage region of the material storage apparatus.

15. A method comprising:
receiving material from a first isotope enrichment module and feeding the received material into a second isotope enrichment module and a material storage apparatus; and
controlling the proportion of material received from the first isotope enrichment module which is fed to the material storage apparatus.

## Patentansprüche

1. Verbindungsvorrichtung, die zu Folgendem konfiguriert ist:
Aufnehmen eines ersten Materials von einem ersten Isotopenanreicherungsmodul und Speisen des aufgenommenen ersten Materials in ein zweites Isotopenanreicherungsmodul und eine erste Lagerungsregion einer Materiallagerungsvorrichtung und
Aufnehmen eines zweiten Materials von dem zweiten Isotopenanreicherungsmodul und Speisen des aufgenommenen zweiten Materials in eine zweite Lagerungsregion der Materiallagerungsvorrichtung.

2. Vorrichtung nach Anspruch 1, wobei das erste Material ein erstes an Isotopen abgereichertes Material ist, das zweite Material ein zweites an Isotopen abgereichertes Material ist und die Materiallagerungsvorrichtung eine Lagerungsvorrichtung für an Isotopen abgereichertes Material ist.

3. Vorrichtung nach Anspruch 1 oder 2, die dazu konfiguriert ist, ein neues Anreicherungsmodul mit einem existierenden Anreicherungsmodul durch Folgendes zu verbinden:
Aufnehmen des ersten Materials von dem ersten Isotopenanreicherungsmodul und Speisen des aufgenommenen ersten Materials in ein hinzugefügtes zweites Isotopenanreicherungsmodul und eine erste Lagerungsregion der Materiallagerungsvorrichtung und
Aufnehmen des zweiten Materials von dem hinzugefügten zweiten Isotopenanreicherungsmodul und Speisen des aufgenommenen zweiten Materials in eine zweite Lagerungsregion der Materiallagerungsvorrichtung.

4. Vorrichtung nach einem der Ansprüche 1 bis 3 und das zweite Isotopenanreicherungsmodul, das zum Aufnehmen des ersten Materials von der Vorrichtung verbunden ist.

5. Vorrichtung nach einem vorhergehenden Anspruch, die weiterhin die Materiallagerungsvorrichtung umfasst.

6. Vorrichtung nach Anspruch 5, wobei die Materiallagerungsvorrichtung eine oder mehrere Einheiten zum rekonfigurierbaren Erhöhen der Größe der ersten Lagerungsregion durch Übertragen von Lagerungskapazität von der zweiten Lagerungsregion umfasst.

7. Vorrichtung nach Anspruch 5 oder 6, wobei die Materiallagerungsvorrichtung eine oder mehrere Einheiten zum rekonfigurierbaren Erhöhen der Größe der zweiten Lagerungsregion durch Übertragen von Lagerungskapazität von der ersten Lagerungsregion umfasst.

8. Vorrichtung nach einem vorhergehenden Anspruch, die eine Flusssteuereinheit umfasst, die dazu konfiguriert ist, den Anteil an von dem ersten Isotopenanreicherungsmodul aufgenommenem erstem Material, das in die erste Lagerungsregion der Lagerungsvorrichtung gespeist wird, zu steuern und dadurch den Anteil an von dem ersten Isotopenanreicherungsmodul aufgenommenem erstem Material, das in das zweite Isotopenanreicherungsmodul gespeist wird, zu steuern.

9. Vorrichtung nach Anspruch 8, die einen Sensor umfasst, der dazu konfiguriert ist, mindestens eine Flusseigenschaft von an dem zweiten Anreicherungsmodul aufgenommenem erstem Material zu erfassen und ein Steuersignal an die Flusssteuereinheit bereitzustellen, das die erfasste Flusseigenschaft anzeigt, um die Anteile an aufgenommenem erstem Material, das in die erste Region der Lagerungsvorrichtung und das zweite Isotopenanreicherungsmodul gespeist wird, zu steuern.

10. Vorrichtung nach einem vorhergehenden Anspruch, die dazu konfiguriert ist, Material aufzunehmen, das von dem zweiten Isotopenanreicherungsmodul mit Isotopen angereichert wurde, und das aufgenommene angereicherte Material in das erste Isotopenanreicherungsmodul zu speisen.

11. Vorrichtung, die dazu konfiguriert ist, Material von einem ersten Isotopenanreicherungsmodul aufzunehmen und das aufgenommene Material in ein zweites Isotopenanreicherungsmodul und eine Materiallagerungsvorrichtung zu speisen, und die eine Flusssteuereinheit umfasst, die dazu konfiguriert ist, den Anteil an von dem ersten Isotopenanreicherungsmodul aufgenommenem Material, das in die Materiallagerungsvorrichtung gespeist wird, zu steuern.

12. Vorrichtung nach Anspruch 11, wobei die Vorrichtung dazu konfiguriert ist, das aufgenommene Material, das nicht in die Isotopenmateriallagerungsvorrichtung gespeist wird, in das zweite Isotopenanreicherungsmodul zu speisen und dadurch den Anteil an von dem ersten Isotopenanreicherungsmodul aufgenommenem Material, das in das zweite Isotopenanreicherungsmodul gespeist wird, zu steuern.

13. Vorrichtung nach einem vorhergehenden Anspruch, die zu Folgendem konfiguriert ist:
direktes Speisen von Material von einer Speisequelle in das primäre Anreicherungsmodul und
direktes Speisen von Material von der Speisequelle in das sekundäre Anreicherungsmodul, um zu ermöglichen, dass die Speisequelle einem oder beiden des primären und des sekundären Anreicherungsmoduls Speisematerial zuführt.

14. Verfahren, das Folgendes umfasst:
Aufnehmen von Material von einem ersten Isotopenanreicherungsmodul und Speisen des aufgenommenen Materials in ein zweites Isotopenanreicherungsmodul und eine erste Lagerungsregion einer Materiallagerungsvorrichtung und
Aufnehmen von Material von dem zweiten Isotopenanreicherungsmodul und Speisen des aufgenommenen Materials in eine zweite Lagerungsregion der Materiallagerungsvorrichtung.

15. Verfahren, das Folgendes umfasst:
Aufnehmen von Material von einem ersten Isotopenanreicherungsmodul und Speisen des aufgenommenen Materials in ein zweites Isotopenanreicherungsmodul und eine Materiallagerungsvorrichtung und
Steuern des Anteils an von dem ersten Isotopenanreicherungsmodul aufgenommenen Material, das in die Materiallagerungsvorrichtung gespeist wird.

## Revendications

1. Appareil de connexion configuré pour :
recevoir une première matière en provenance d'un premier module d'enrichissement isotopique et alimenter la première matière reçue jusque dans un deuxième module d'enrichissement isotopique et une première région de stockage d'un appareil de stockage de matière ; et
recevoir une deuxième matière en provenance du deuxième module d'enrichissement isotopique et alimenter la deuxième matière reçue jusque dans une deuxième région de stockage de l'appareil de stockage de matière.

2. Appareil selon la revendication 1, dans lequel la première matière est une première matière appauvrie en isotopes, la deuxième matière est une deuxième matière appauvrie en isotopes et l'appareil de stockage de matière est un appareil de stockage de matière appauvrie en isotopes.

3. Appareil selon la revendication 1 ou la revendication 2, qui est configuré pour connecter un nouveau module d'enrichissement sur un module d'enrichissement existant par :
l'étape consistant à recevoir la première matière en provenance du premier module d'enrichissement isotopique et l'étape consistant à alimenter la première matière reçue jusque dans un deuxième module d'enrichissement isotopique ajouté et une première région de stockage de l'appareil de stockage de matière ; et
l'étape consistant à recevoir la deuxième matière en provenance du deuxième module d'enrichissement isotopique ajouté et l'étape consistant à alimenter la deuxième matière reçue jusque dans une deuxième région de stockage de l'appareil de stockage de matière.

4. Appareil selon l'une quelconque des revendications 1 à 3, et le deuxième module d'enrichissement isotopique connecté pour recevoir la première matière en provenance de l'appareil.

5. Appareil selon l'une quelconque des revendications précédentes, comportant par ailleurs l'appareil de stockage de matière.

6. Appareil selon la revendication 5, dans lequel l'appareil de stockage de matière comporte une ou plusieurs unités servant à augmenter par reconfiguration la taille de la première région de stockage par le transfert de capacité de stockage en provenance de la deuxième région de stockage.

7. Appareil selon la revendication 5 ou la revendication 6, dans lequel l'appareil de stockage de matière comporte une ou plusieurs unités servant à augmenter par reconfiguration la taille de la deuxième région de stockage par le transfert de capacité de stockage en provenance de la première région de stockage.

8. Appareil selon l'une quelconque des revendications précédentes, comportant une unité de commande de débit configurée pour commander la proportion de première matière reçue en provenance du premier module d'enrichissement isotopique qui est alimentée jusque dans la première région de stockage de l'appareil de stockage et pour de ce fait commander la proportion de première matière reçue en provenance du premier module d'enrichissement isotopique qui est alimentée jusque dans le deuxième module d'enrichissement isotopique.

9. Appareil selon la revendication 8, comportant un capteur configuré pour détecter au moins une propriété de débit de la première matière reçue au niveau du deuxième module d'enrichissement et pour fournir un signal de commande à l'unité de commande de débit servant à indiquer la propriété de débit détectée pour commander les proportions de la première matière reçue alimentée jusque dans la première région de l'appareil de stockage et dans le deuxième module d'enrichissement isotopique.

10. Appareil selon l'une quelconque des revendications précédentes, configuré pour recevoir de la matière qui a été enrichie isotopiquement par le deuxième module d'enrichissement isotopique et pour alimenter la matière enrichie reçue jusque dans le premier module d'enrichissement isotopique.

11. Appareil configuré pour recevoir de la matière en provenance d'un premier module d'enrichissement isotopique et pour alimenter la matière reçue jusque dans un deuxième module d'enrichissement isotopique et un appareil de stockage de matière, comportant une unité de commande de débit configurée pour commander la proportion de matière reçue en provenance du premier module d'enrichissement isotopique qui est alimentée jusque dans l'appareil de stockage de matière.

12. Appareil selon la revendication 11, dans lequel l'appareil est configuré pour alimenter la matière reçue, n'ayant pas été alimentée jusque dans l'appareil de stockage de matière isotopique, jusque dans le deuxième module d'enrichissement isotopique et pour de ce fait commander la proportion de matière reçue en provenance du premier module d'enrichissement isotopique qui est alimentée jusque dans le deuxième module d'enrichissement isotopique.

13. Appareil selon l'une quelconque des revendications précédentes, qui est configuré pour :
alimenter la matière directement en provenance d'une source d'alimentation jusque dans le module d'enrichissement primaire ; et
alimenter la matière directement en provenance de la source d'alimentation jusque dans le module d'enrichissement secondaire pour permettre à la source d'alimentation d'approvisionner soit l'un soit l'autre ou les deux parmi les modules d'enrichissement primaire et secondaire en matière d'alimentation.

14. Procédé comportant :
l'étape consistant à recevoir de la matière en provenance d'un premier module d'enrichissement isotopique et l'étape consistant à alimenter la matière reçue jusque dans un deuxième module d'enrichissement isotopique et une première région de stockage d'un appareil de stockage de matière ; et
l'étape consistant à recevoir de la matière en provenance du deuxième module d'enrichissement isotopique et l'étape consistant à alimenter la matière reçue jusque dans une deuxième région de stockage de l'appareil de stockage de matière.

15. Procédé comportant :
l'étape consistant à recevoir de la matière en provenance d'un premier module d'enrichissement isotopique et l'étape consistant à alimenter la matière reçue jusque dans un deuxième module d'enrichissement isotopique et un appareil de stockage de matière ; et
l'étape consistant à commander la proportion de matière reçue en provenance du premier module d'enrichissement isotopique qui est alimentée jusque dans l'appareil de stockage de matière.
